# EUROPÄISCHE PATENTSCHRIFT

(11) **EP 1 004 344 B1**
(45) Veröffentlichungstag und Bekanntmachung des Hinweises auf die Patenterteilung: **13.08.2003**
(21) Anmeldenummer: 99122830.5
(22) Anmeldetag: 17.11.1999
(51) Int. Cl.: B01D 53/14

(54) **Verfahren zur Reinigung von Gasen und dazu geeignete Absorptionsflüssigkeit**
Process for purifying gases and absorbent therefor
Procédé pour la purification de gaz et absorbant approprié

(30) Priorität: 25.11.1998 DE 19854353
(43) Veröffentlichungstag der Anmeldung: 31.05.2000
(73) Patentinhaber: Clariant GmbH, 65929 Frankfurt am Main (DE)
(72) Erfinder: Stankowiak, Achim, Dr, 84503 Altötting (DE); Streitberger, Horst, 85403 Altötting (DE); Wyschofsky, Michael, 44135 Dortmund (DE)

(56) Entgegenhaltungen:
- EP-A- 0 452 694
- WO-A-95/13128
- DE-A- 3 922 904
- US-A- 4 705 673

## Beschreibung

Die vorliegende Erfindung betrifft die Verwendung von Alkanolaminen zur Reinigung von Gasen von säurebildenden Verunreinigungen, sowie eine geeignete Absorptionsflüssigkeit.

Gase verschiedensten Ursprungs wie beispielsweise Erdgas oder Synthesegas enthalten gasförmige, säurebildende Verunreinigungen wie beispielsweise CO₂, H₂S, SO₂, CS₂, HCN, COS oder Mercaptane. Die Entfernung der genannten Verunreinigungen ist im allgemeinen wegen der weiteren Nutzung der Gase erforderlich. Werden die Gase verbrannt, so sind behördliche Bestimmungen zu beachten, die den Schwefelausstoß begrenzen. Hohe CO₂-Anteile senken darüberhinaus den Heizwert. Mercaptane müssen wegen ihres Geruchs und ihrer Toxizität entfernt werden. Werden die Gase für chemische Prozesse verwendet, so sind die Verunreinigungen oft störende Katalysatorgifte. Daneben verursachen die sauren Verunreinigungen Korrosion an Teilen, die mit den Gasen in Kontakt kommen.

Im Stand der Technik sind Verfahren zur Entfernung solcher Verunreinigungen beschrieben.

US-3 716 620 offenbart ein Verfahren zur Entfernung von Mercaptanen, indem man die Gase mit einer Lösung von Jod und Aminen in Kontakt bringt.

WO-A-95/13128 offenbart ein Verfahren zur Reinigung von Gasen von sauren Verunreinigungen, indem man die Gase mit einer Lösung in Kontakt bringt, die 10 bis 98 Gew.-% eines Polyethylenglykolalkylethers, 1 bis 20 Gew.-% sekundären Monoalkanolamins und gegebenenfalls 10 bis 60 Gew.-% eines Dialkanolamins enthält.

US-4 705 673 offenbart ein Verfahren zur chemischen Gaswäsche und eine Absorptionsflüssigkeit, die 17,9 Gew.-% eines Alkanolamins, 10 bis 40 Gew.-% Wasser und einen Glykolether ad 100 Gew.-% enthält.

Die Verfahren nach dem Stand der Technik erfordern große Mengen der basischen Alkanolamine. Aufgabe der vorliegenden Erfindung war es, ein Verfahren zur Reinigung von Gasen von sauren Verunreinigungen bereitzustellen, das mit geringen Mengen von Alkanolaminen auskommt.

Überraschenderweise wurde nun gefunden, daß Dialkanolamine gelöst in Polyalkylenglykolalkylethern im Beisein von geringen Mengen Wasser in sehr niedrigen Konzentrationen die sauren Verunreinigungen, insbesondere Schwefelwasserstoff, aus Gasen wirksam abfangen. Durch die erhöhte Wirksamkeit der erfindungsgemäßen Absorptionsflüssigkeit ist es möglich, entsprechende Gaswaschanlagen mit geringeren Mengen an Absorptionsflüssigkeit zu betreiben, oder den Gasdurchsatz zu erhöhen.

Gegenstand der Erfindung ist die Verwendung einer Absorptionsflüssigkeit zur Reinigung von Gasen von gasförmigen, sauren Verunreinigungen, dadurch gekennzeichnet, daß die Absorptionsflüssigkeit
A) 0,01 bis 4 Gew.-% mindestens einer Verbindung der Formel 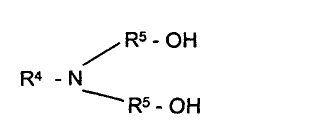
B) 0,001 bis 8,0 Gew.-% Wasser, sowie
C) mindestens einen Polyalkylenglykolalkylether der Formel

   R₁-O-(R₂-O)ₓ-R₃

   ad 100 Gew.-% enthält,
   wobei
   R¹ C₁-C₄-Alkyl,
   R² Ethylen oder 2-Methylethylen,
   R³ Wasserstoff oder C₁-C₄-Alkyl,
   R⁴ Wasserstoff oder C₁-C₄-Alkyl,
   R⁵ C₁-C₄-Alkylen und
   X eine ganze Zahl zwischen 1 und 10 bedeuten.

Bei den zu reinigenden Gasen kann es sich um beliebige Gase handeln, die entsprechende Verunreinigungen enthalten und die selbst mit der Absorptionsflüssigkeit nicht reagieren. Besonders geeignet ist die Absorptionsflüssigkeit für die Reinigung von Erdgas und Synthesegas.

Die Verunreinigungen, die durch die erfindungsgemäße Verwendung zu entfernen sind, sind säurebildend und gas- oder dampfförmig. Es handelt sich insbesondere um CO₂, H₂S, SO₂, CS₂, HCN, COS oder niedere Mercaptane mit C₁-C₈-Kohlenstoffresten.

Die Absorptionsflüssigkeit besteht aus mindestens einem Polyalkylenglykolalkylether und mindestens einem Dialkanolamin, sowie Wasser. In einer bevorzugten Ausführungsform der Erfindung stehen R¹ und R³ für Methyl oder Butyl oder R¹ für Methyl oder Butyl und R³ für Wasserstoff. R² bedeutet vorzugsweise einen Ethylenrest. X ist vorzugsweise 2 bis 8.

R⁴ steht in einer bevorzugten Ausführungsform für Methyl. R⁵ bedeutet vorzugsweise Methylen oder Ethylen, insbesondere Ethylen. Ein besonders bevorzugtes Dialkanolamin ist N-Methyldiethanolamin. Der Gehalt der Absorptionsflüssigkeit an Dialkanolamin liegt vorzugsweise zwischen 0,1 und 2 Gew.-%, insbesondere zwischen 0,2 und 0,99 Gew.-%, speziell zwischen 0,25 und 0,7 Gew.-% und besonders bevorzugt zwischen 0,3 und 0,6 Gew.-%. In einer weiteren bevorzugten Ausführungsform der Erfindung enthält die Absorptionsflüssigkeit 0,005 bis 5, insbesondere 0,01 bis Gew.-% Wasser.

Die Gaswäsche kann drucklos oder unter Druck durchgeführt werden. Wird die Gaswäsche unter Druck durchgeführt, so sind Drucke bis zu 100 Atmosphären bevorzugt.

Die Gaswäsche kann bei Temperaturen oberhalb des Erstarrungspunktes der Absorptionsflüssigkeit durchgeführt werden. Bevorzugt ist der Temperaturbereich zwischen 20 und 100°C.

Ein weiterer Gegenstand der Erfindung ist eine Absorptionsflüssigkeit für saure, gasoder dampfförmige Verbindungen, bestehend aus
A) 0,01 bis 4 Gew.-% mindestens einer Verbindung der Formel 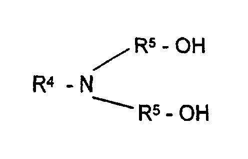
B) 0,001 bis 8,0 Gew.-% Wasser, sowie
C) mindestens einem Polyalkylenglykolalkylether der Formel

   R₁-O-(R₂-O)ₓ-R₃

   ad 100 Gew.-%,
   wobei
   R¹ C₁-C₄-Alkyl,
   R² Ethylen oder 2-Methylethylen,
   R³ Wasserstoff oder C₁-C₄-Alkyl,
   R⁴ Wasserstoff oder C₁-C₄-Alkyl,
   R⁵ C₁-C₄-Alkylen und
   X eine ganze Zahl zwischen 1 und 10 bedeuten.

Die bevorzugten Ausführungsformen der erfindungsgemäßen Absorptionsflüssigkeit sind bereits beschrieben.

Ein weiterer Gegenstand der Erfindung ist ein Verfahren zur Reinigung von Gasen, indem man die Gase bei Temperaturen von 20 bis 100°C und Drucken von 1 bis 100 Atmosphären mit der erfindungsgemäßen Absorptionsflüssigkeit in Kontakt bringt.

### Beispiele

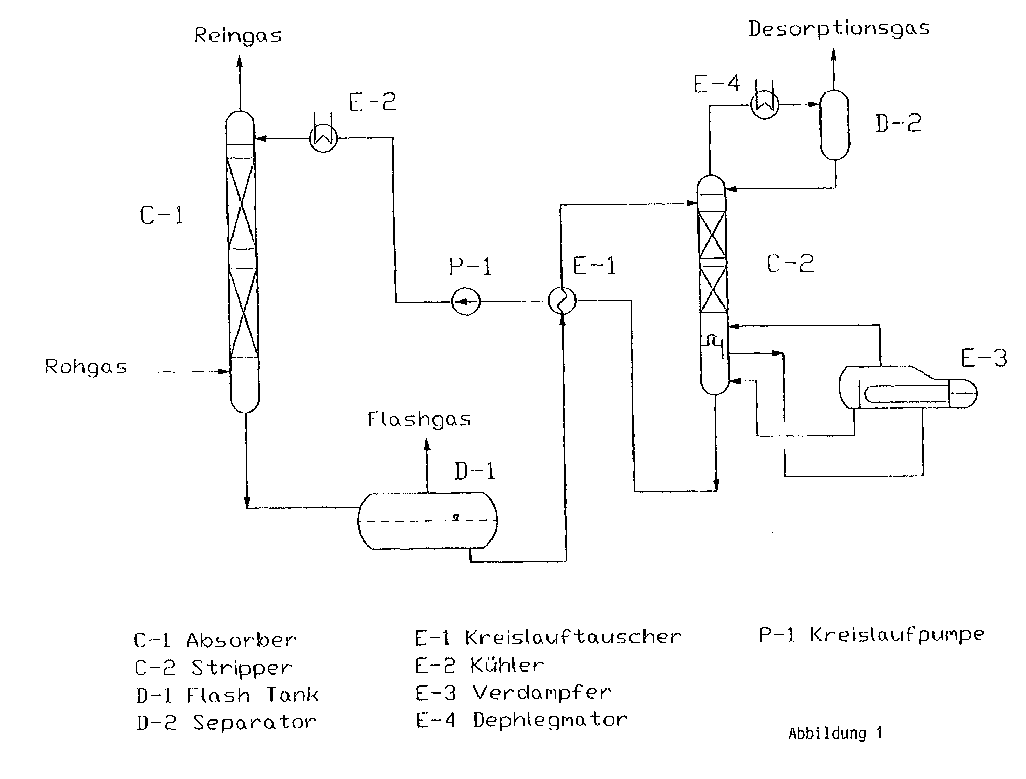

Die Wirksamkeit der erfindungsgemäßen Absorptionsflüssigkeit werde anhand zweier Versuchseinstellungen, die an einer Pilotanlage durchgeführt wurden dargestellt werden, siehe Fig. 1.

Ein in einer Vergasungsanlage erzeugtes Syntheserohgas (kurz Rohgas) werde unter einem Druck von 24 bar und einer Temperatur von ca. 30°C in den Sumpf der Absorptionskolonne C-1 geführt.

Das Rohgas besaß folgende Zusammensetzung:

| | | |
|---|---|---|
| H₂S | Vol.-ppm | 480 |
| CO₂ | Vol.-% | 20,7 |
| CH₄ | Vol.-% | 5,6 |
| H₂ | Vol.-% | 40,7 |
| CO | Vol.-% | 33,0 |

Der H₂S-Gehalt konnte über eine Dosierstation eingestellt werden.

Funktionsweise der Absorptionsanlage:
Im Absorber C-1 erfolgt im Gegenstrom mit Absorptionsflüssigkeit die H₂S-Auswaschung bis auf Restspuren. Die beladene Absorptionsflüssigkeit verläßt den Absorbersumpf und wird in den Flash-Tank D-1 entspannt. Hier entweichen die gelösten Komponenten CH₄, H₂ und CO, sowie Teile des gelösten CO₂. Die weitgehend entgaste Absorptionsflüssigkeit gelangt vorgewärmt über den Kreislauftauscher E-1 auf den Kopf der Regenerationskolonne C-2. Hier werden H₂S und Restanteile CO₂ durch thermisches Strippen mit Wasserdampf bis auf geringste Spuren aus der Absorptionsflüssigkeit ausgetrieben. Die erforderliche Menge Regenerationsdampf wird im Verdampfer E-3 erzeugt. Die feinregenerierte Absorptionsflüssigkeit gelangt über den Kreislauftauscher E-1 vorgekühlt zur Kreislaufpumpe P-1 und wird über den Wasserkühler E-2 mit einer Temperatur von ca. 30°C zum Kopf der Absorptionskolonne C-1 gefördert. Das Desorptionsgas gelangt über den Dephlegmator E-4 und Separator D-2 zur Anlagengrenze und wird gemeinsam mit dem Flashgas in einer Schwefelgewinnungsanlage aufbereitet.

Es wurden zwei Versuche mit gleich gehaltenen Randbedingungen durchgeführt, die zu verschiedenen Zeitpunkten mit verschiedenen Absorbentien gefahren wurden.

Das Ziel der Versuche war, zu zeigen, daß bei Verwendung einer erfindungsgemäßen Absorptionsflüssigkeit deren Umlaufmenge im Vergleich zum Stand der Technik reduziert werden kann.

### Versuch 1 (Vergleichsbeispiel)

Es erfolgt der Einsatz eines Polyethylenglykoldimethylethers (kurz: PEGDME) einer Molmasse von ca. 270 (Handelsbezeichnung ®Genosorb 1753).

### Versuch 2 (erfindungsgemäßes Beispiel)

Es erfolgt der Einsatz eines Gemisches aus dem gleichen PEGDME wie in Versuch 1 mit 0,6 Gew.-% Methyldiethanolamin und 5 Gew.-% Wasser.
Als gleich gehaltene Randbedingungen wurden folgende Größen festgelegt:
1. Rohgasmenge
2. Rohgaszusammensetzung, einschließlich H₂S-Gehalt
3. H₂S-Gehalt im Reingas
4. Temperatur des Rohgases am Absorbereintritt
5. Temperatur des regenerierten Lösungsmittels am Absorberzulauf
6. Wassergehalt des regenerierten Lösungsmittels
7. Strippdampfverhältnis der thermischen Regeneration

Als Zielgröße der jeweiligen Versuchseinstellung wird der Umlauf der Absorptionsflüssigkeit erfaßt.

Die Versuchsergebnisse:
Nachfolgende Zahlen basieren auf statistischen Daten, die jeweils während einer längeren Versuchseinstellung (mindestens 8 Stunden) aus On-line-Meßwerten ermittelt wurden:

| | | Versuch I | Versuch II |
|---|---|---|---|
| Rohgas | Nm³/h | 370 | 370 |
| Rohgas | °C | 32 | 32 |
| H₂S im Rohgas | Vol.-ppm | 480 | 480 |
| H₂S im Reingas | Vol.-ppm | 11 | 11 |
| Lösungsmittel | m³/h | 2,2 | 2,0 |
| Lösungsmittel | °C | 30 | 30 |

Das Versuchsergebnis zeigt, daß mit einem um 10 % erhöhten Umlauf der erfindungsgemäßen Absorptionsflüssigkeit in bezug auf den Umlauf der Absorptionsflüssigkeit des Standes der Technik die gleiche Wirkung in der Gaswäsche erzielt wird. Die erfindungsgemäße Absorptionsflüssigkeit erlaubt unter diesen Bedingungen eine Verringerung der Flüssigkeitsmenge um 10 %.

## Patentansprüche

1. Verwendung einer Absorptionsflüssigkeit zur Reinigung von Gasen von gasförmigen, sauren Verunreinigungen, **dadurch gekennzeichnet, daß** die Absorptionsflüssigkeit
A) 0,01 bis 4 Gew.-% mindestens einer Verbindung der Formel 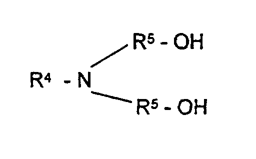
B) 0,001 bis 8,0 Gew.-% Wasser, sowie
C) mindestens einen Polyalkylenglykolalkylether der Formel
R₁-O-(R₂-O)ₓ-R₃
ad 100 Gew.-% enthält,
wobei
R¹ C₁-C₄-Alkyl,
R² Ethylen oder 2-Methylethylen,
R³ Wasserstoff oder C₁-C₄-Alkyl,
R⁴ Wasserstoff oder C₁-C₄-Alkyl,
R⁵ C₁-C₄-Alkylen und
X eine ganze Zahl zwischen 1 und 10 bedeuten.

2. Verwendung nach Anspruch 1, **dadurch gekennzeichnet, daß** es sich bei dem zu reinigenden Gas um Erdgas oder Synthesegas handelt.

3. Verwendung nach Anspruch 1 und/oder 2, **dadurch gekennzeichnet, daß** es sich bei den Verunreinigungen um CO₂, H₂S, SO₂, COS, CS₂, HCN oder ein Mercaptan mit einem C₁-C₈-Kohlenwasserstoffrest handelt.

4. Verwendung nach einem oder mehreren der Ansprüche 1 bis 3, **dadurch gekennzeichnet, daß** R¹ Methyl oder Butyl bedeutet.

5. Verwendung nach einem oder mehreren der Ansprüche 1 bis 4, **dadurch gekennzeichnet, daß** R³ Wasserstoff, Methyl oder Butyl bedeutet.

6. Verwendung nach einem oder mehreren der Ansprüche 1 bis 5, **dadurch gekennzeichnet, daß** X eine Zahl von 2 bis 8 bedeutet.

7. Verwendung nach einem oder mehreren der Ansprüche 1 bis 6, **dadurch gekennzeichnet, daß** R⁴ Methyl bedeutet.

8. Verwendung nach einem oder mehreren der Ansprüche 1 bis 7, **dadurch gekennzeichnet, daß** R⁵ für einen Methylen- oder Ethylenrest steht.

9. Verwendung nach einem oder mehreren der Ansprüche 1 bis 8, **dadurch gekennzeichnet, daß** die Absorptionsflüssigkeit 0,1 bis 0,7 Gew.-% des Dialkanolamins enthält.

10. Verwendung nach einem oder mehreren der Ansprüche 1 bis 9, **dadurch gekennzeichnet, daß** die Absorptionsflüssigkeit 0,005 bis 5 Gew.-% Wasser enthält.

11. Absorptionsflüssigkeit, bestehend aus
A) 0,01 bis 4 Gew.-% mindestens einer Verbindung der Formel 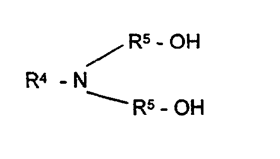
B) 0,001 bis 8,0 Gew.-% Wasser, sowie
C) mindestens einem Polyalkylenglykolalkylether der Formel
R₁-O-(R₂-O)ₓ-R₃
ad 100 Gew.-%,
wobei
R¹ C₁-C₄-Alkyl,
R² Ethylen oder 2-Methylethylen,
R³ Wasserstoff oder C₁-C₄-Alkyl,
R⁴ Wasserstoff oder C₁-C₄-Alkyl,
R⁵ C₁-C₄-Alkylen und
X eine ganze Zahl zwischen 1 und 10 bedeuten.

12. Absorptionsflüssigkeit nach Anspruch 11, **dadurch gekennzeichnet, daß** R¹, R³, R⁴, R⁵ und/oder X die in einem oder mehreren der Ansprüche 4 bis 8 genannten Bedeutungen haben.

13. Verfahren zur Reinigung von Erdgas oder Synthesegas von säurebildenden, gas- oder dampfförmigen Verunreinigungen, indem man die Gase bei Temperaturen von 20 bis 100°C und Drucken von 1 bis 100 Atmosphären mit einer Absorptionsflüssigkeit nach Anspruch 11 oder 12 in Kontakt bringt.

## Claims

1. The use of an absorption liquid for freeing gases of gaseous, acidic impurities, wherein the absorption liquid comprises
A) from 0.01 to 4% by weight of at least one compound of the formula 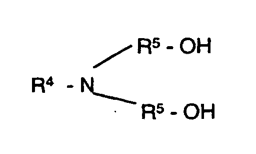
B) from 0.001 to 8.0% by weight of water, and
C) at least one polyalkylene glycol alkyl ether of the formula
R₁-O-(R₂-O)ₓ-R₃
to 100% by weight,
where
R¹ is C₁-C₄-alkyl,
R² is ethylene or 2-methylethylene,
R³ is hydrogen or C₁-C₄-alkyl,
R⁴ is hydrogen or C₁-C₄-alkyl,
R⁵ is C₁-C₄-alkylene and
X is an integer from 1 to 10.

2. The use as claimed in claim 1, wherein the gas to be purified is natural gas or synthesis gas.

3. The use as claimed in claim 1 or 2, wherein the impurities are CO₂, H₂S, SO₂, COS, CS₂, HCN or a mercaptan having a C₁-C₈-hydrocarbon radical.

4. The use as claimed in one or more of claims 1 to 3, wherein R¹ is methyl or butyl.

5. The use as claimed in one or more of claims 1 to 4, wherein R³ is hydrogen, methyl or butyl.

6. The use as claimed in one or more of claims 1 to 5, wherein X is from 2 to 8.

7. The use as claimed in one or more of claims 1 to 6, wherein R⁴ is methyl.

8. The use as claimed in one or more of claims 1 to 7, wherein R⁵ is a methylene or ethylene radical.

9. The use as claimed in one or more of claims 1 to 8, wherein the absorption liquid contains from 0.1 to 0.7% by weight of the dialkanolamine.

10. The use as claimed in one or more of claims 1 to 9, wherein the absorption liquid contains from 0.005 to 5% by weight of water.

11. An absorption liquid comprising
A) from 0.01 to 4% by weight of at least one compound of the formula 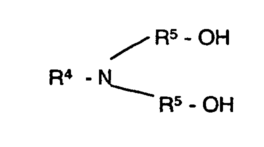
B) from 0.001 to 8.0% by weight of water, and
C) at least one polyalkylene glycol alkyl ether of the formula
R₁-O-(R₂-O)ₓ-R₃
to 100% by weight,
where
R¹ is C₁-C₄-alkyl,
R² is ethylene or 2-methylethylene,
R³ is hydrogen or C₁-C₄-alkyl,
R⁴ is hydrogen or C₁-C₄-alkyl,
R⁵ is C₁-C₄-alkylene and
X is an integer between 1 and 10.

12. An absorption liquid as claimed in claim 11, wherein R¹, R³, R⁴, R⁵ and/or X are as defined in one or more of claims 4 to 8.

13. A process for freeing natural gas or synthesis gas of acid-forming impurities in gas or vapor form, which comprises bringing the gases into contact with an absorption liquid as claimed in claim 11 or 12 at temperatures of from 20 to 100°C and pressures of from 1 to 100 atmospheres.

## Revendications

1. Utilisation d'un fluide absorbant. pour la purification de gaz d'impuretés acides gazeuses, **caractérisé en ce que** le fluide absorbant renferme
A) de 0,01 à 4 % en poids d'au moins un composé de formule 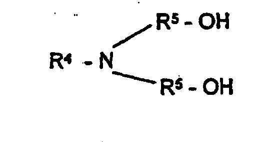
B) de 0,001 à 8,0 % en poids d'eau, ainsi que
C) au moins un éther d'alkyle de polyalkylèneglycol de formule
R₁-O-(R₂-O)ₓ-R₃
qsp à 100 % en poids,
où
R¹ représente un groupe alkyle en C₁-C₄,
R² représente un groupe éthylène ou 2-méthyl-. éthylène,
R³ représente un atome d'hydrogène ou un groupe alkyle en C₁-C₄,
R⁴ représente un atome d'hydrogène ou un groupe alkyle en C₁-C₄,
R5 représente un groupe alkylène en C₁-C₄ et
X est un entier compris entre 1 et 10.

2. Utilisation selon la revendication 1, caractérisée ce que pour le gaz à purifier, il s'agit de gaz naturel ou de gaz de synthèse.

3. Utilisation selon la revendication 1 et/ou 2, **caractérisée en ce que** pour les impuretés, il s'agit de CO₂, H₂S, SO₂, COS, HCN ou un mercaptan présentant un reste hydrocarboné en C₁-C₈.

4. Utilisation selon une ou plusieurs des revendications 1 à 3, **caractérisée en ce que** R¹ représente un groupe méthyle ou butyle.

5. Utilisation selon une ou plusieurs des revendications 1 à 4, **caractérisée en ce que** R³ représente un atome d'hydrogène, un groupe méthyle ou butyle.

6. Utilisation selon une ou plusieurs dès revendications 1 à 5, **caractérisée en ce que** X est un nombre de 2 à 8.

7. Utilisation selon une ou plusieurs des revendications 1 à 6, **caractérisée en ce que** R⁴ représente un groupe méthyle.

8. Utilisation selon une ou plusieurs des revendications 1 à 7, **caractérisée en ce que** R⁵ représente un reste méthylène ou éthylène.

9. Utilisation selon une ou plusieurs des revendications 1 à 8, **caractérisée en ce que** le fluide absorbant renferme de 0,1 à 0,7 % en poids de la dialcanolamine.

10. Utilisation selon une ou plusieurs des revendications 1 à 9, **caractérisée en ce que** le fluide absorbant renferme de 0,005 à 5 % en poids d'eau.

11. Fluide absorbant comprenant
A) de 0,01 à 4 % en poids d'au moins un composé de formule 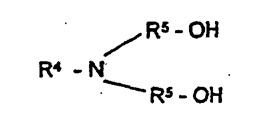
B) de 0,001 à 8,0 % en poids en eau, ainsi que
C) au moins un éther d'alkyle de polyalkylèneglycol de formule
R₁-O-(R₂-O)ₓ-R₃
qsp à 100 % en poids,
où
R¹ représente un groupe alkyle en C₁-C₄,
R² représente un groupe éthylène ou 2-méthyl-éthylène,
R³ représente un atome d'hydrogène ou un groupe alkyle en C₁-C₄,
R⁴ représente un atome d'hydrogène ou un groupe alkyle en C₁-C₄,
R⁵ représente un groupe alkylène en C₁-C₄ et
X est un entier compris entre 1 et 10.

12. Fluide absorbant selon la revendication 11, **caractérisé en ce que** R¹, R³, R⁴, R⁵ et/ou X possèdent les significations données dans une ou plusieurs des revendications 4 à 8.

13. Procédé pour la purification de gaz naturel ou de gaz de synthèse des impuretés gazeuses ou à l'état de vapeur par mise en contact des gaz à une température de 20 à 100°C et des pressions de 1 à 100 atmosphères avec un fluide absorbant selon les revendications 11 ou 12.
